## Europäisches Patentamt
## European Patent Office
## Office européen des brevets

(19)

(11) Veröffentlichungsnummer: **0 097 765**
**B1**

(12)

# EUROPÄISCHE PATENTSCHRIFT

(45) Veröffentlichungstag der Patentschrift:
01.07.87

(51) Int. Cl.⁴: **B 60 K 41/04**

(21) Anmeldenummer: 83102180.3

(22) Anmeldetag: 05.03.83

(54) Regelsystem für eine Kraftfahrzeug-Antriebseinheit.

(30) Priorität: 24.06.82 DE 3223555

(43) Veröffentlichungstag der Anmeldung:
11.01.84 Patentblatt 84/2

(45) Bekanntmachung des Hinweises auf die Patenterteilung:
01.07.87 Patentblatt 87/27

(84) Benannte Vertragsstaaten:
DE FR GB IT NL SE

(56) Entgegenhaltungen:
WO-A-79/00781
DE-A-2 933 714
DE-A-2 942 961
FR-A-1 469 727
GB-A-2 030 661

(73) Patentinhaber: Dr.Ing.h.c. F. Porsche
Aktiengesellschaft, Porschestrasse 42, D-7000
Stuttgart 40 (DE)

(72) Erfinder: Stelter, Norbert, Talstrasse 17, D-7251
Weissach (DE)
Erfinder: Wüst, Rainer, Im Krügele 11/1, D-7135
Wiernsheim (DE)
Erfinder: op de Beeck, Peter, Jägerstrasse 2B,
D-7251 Heimsheim (DE)
Erfinder: Bofinger, Gerd, Feuerbacher Weg 101,
D-7000 Stuttgart 30 (DE)

EP 0 097 765 B1

**Beschreibung**

Die Erfindung betrifft ein Regelsystem für eine Kraftfahrzeug-Antriebseinheit aus Motor und Getriebe nach dem Oberbegriff des Anspruchs 1.

Bei Verwendung solcher Regel- und Steuersysteme wird das Kraftfahrzeug allein durch Betätigen des Fahrpedals vollautomatisch so gesteuert, daß der Motor bei allen Betriebszuständen mit gutem Wirkungsgrad arbeitet und der Kraftstoffverbrauch möglichst nieder ist. Hierzu wird über ein Steuergerät, in das Signale der Fahrpedalstellung, der Kupplungsausgangsdrehzahl, des Motordrehmoments sowie der jeweils eingelegten Gangstufen eingegeben werden, eine Verstelleinrichtung zum Einlegen der günstigsten Gangstufe angesteuert.

Bei einer bekannten derartigen Steuerung (DE-A- 28 11 574) ist in dem Steuergerät ein Motorkennfeld mit einer Vielzahl von Kennlinien gespeichert, die die Motorleistung in Abhängigkeit von der Motordrehzahl·und Drosselklappenstellung angeben. Außerdem ist in dem Steuergerät ein Getriebekennfeld gespeichert, das Kennlinien für die Getriebeübersetzungen in Abhängigkeit von Leistungssollwerten und der Fahrzeuggeschwindigkeit enthält. Dieses Regelsystem erfordert großen Speicherbedarf für die Kennfelder. Die Art der Abfrage, in welchem Bereich, also zwischen welchen Kennlinien der gewünschte Betriebspunkt liegt, macht die Gesamtanlage aufwendig. Für die Steuerung werden Kennfelder benutzt, die im Neuzustand des Kraftfahrzeugtyps bei genau definierten Temperatur- und Luftdruckverhältnissen aufgenommen sind. Der tatsächliche Betriebszustand des Kraftfahrzeugs sowie die Umgebungsbedingungen werden nicht ausreichend bei der Steuerung berücksichtigt.

Es ist daher die Aufgabe der Erfindung, ein Regelsystem für eine aus Motor und Getriebe bestehende Kraftfahrzeug-Antriebseinheit zu schaffen, das mit einfacheren Mitteln eine Regelung aufgrund der tatsächlich vorliegenden Kenndaten des jeweiligen Kraftfahrzeugs gestattet.

Zur Lösung dieser Aufgabe werden gemäß der Erfindung die im Kennzeichen des Anspruchs 1 aufgeführten Merkmale vorgeschlagen. Da in dem Steuergerät nur eine einzige Funktionslinie und nur wenige Kennwerte der Getriebeübersetzungen gespeichert sind, ist der Speicheraufwand verhältnismäßig gering. In das erfindungsgemäße Regelsystem ist eine an sich bekannte Regelschaltung für die Motorleistung einbezogen, die aufgrund der tatsächlich vorliegenden Kennwerte des Kraftfahrzeugs die Motorleistung, z. B. durch entsprechende Einstellung der Drosselklappe auf dem Wert konstant hält, wie er durch das Fahrpedal vorgegeben ist. Eine Änderung der Motordrehzahl bzw. des Motordrehmoments erfolgt also immer auf einer Linie konstanter Leistung. Das Regelsystem schaltet vollautomatisch die höchste, gerade noch unterhalb einer gespeicherten Leistungslinie liegende Gangstufe.

In den Unteransprüchen 2 bis 9 sind weitere vorteilhafte Ausgestaltungen der Erfindung enthalten.

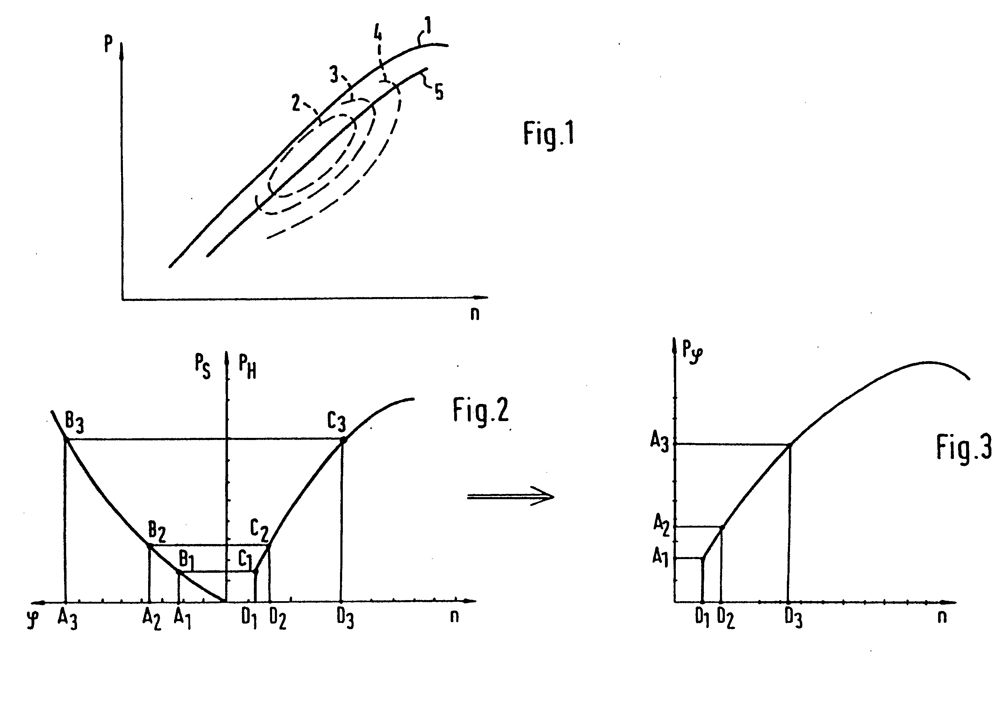

In Fig. 1 sind eine Volllastlinie 1 eines Hubkolben-Verbrennungsmotors sowie Kurven 2, 3, 4 gleichen spezifischen Kraftstoffverbrauchs dargestellt. Um den Motor mit möglichst hohem Wirkungsgrad betreiben zu können, ist man bestrebt, seinen Betriebspunkt immer in die Nähe der Kurve 2 zu legen, die einen minimalen Kraftstoffverbrauch bezeichnet. Für den Betrieb eines Kraftfahrzeuges bei unterschiedlichen Geschwindigkeiten kann ein optimaler, d.h., verbrauchsgünstiger Betrieb auf der Linie 5 des größten Wirkungsgrades über der Drehzahl erreicht werden. Mit einem Gangschaltgetriebe läßt sich dieses Ziel nur unvollkommen erreichen, da die sich aus der Getriebeübersetzung ergebende Stufung der Motordrehzahl viel zu grob ist. Mit dem erfindungsgemäßen Regelsystem wird deshalb ein anderer Weg beschritten. Man gibt sich eine Motorleistungskennlinie $P \varphi (n)$ vor, die in Fig. 3 gezeigt ist, und schaltet jeweils die Gangstufe ein, bei der die der Fahrpedalstellung $\varphi$ entsprehende Motorleistung möglichst nah unter der Linie $P \varphi (n)$ liegt. Die Linie $P \varphi (n)$ ist aus den in Fig. 2 dargestellten Leistungslinien, aus der oberen Leistungslinie $P_H$ für minimalen Kraftstoffverbrauch und der Leistungssollwertkennlinie $P_S$ gebildet. Hierzu sind die Kurven $P_H$ und $P_S$ mit horizontalen Linien, also Linien gleicher Leistung geschnitten, wodurch sich auf der Kurve $P_S$ die Schnittpunkte $B_1$, $B_2$, $B_3$, auf der Kurve $P_H$ die Punkte $C_1$, $C_2$, $C_3$ ergeben. Durch Projektion der Punkte $B_1$, $B_2$, $B_3$ auf die $\varphi$ - Achse erhält man die Punkte $A_1$, $A_2$, $A_3$, durch Projektion der Punkte $C_1$, $C_2$, $C_3$ auf die n-Achse die Punkte $D_1$, $D_2$, $D_3$. In dem Schaubild nach Fig. 3 sind die Werte $D_1$, $D_2$, $D_3$ auf der n-Achse die Werte $A_1$, $A_2$ $A_3$ auf der Ordinate aufgetragen.

Die Linie $P_H$ wird so gewählt, daß bei gleicher Leistung vor und nach einer Schaltung der gleiche spezifische Kraftstoffverbrauch erreicht wird. Diese Bedingung kann nur erfüllt werden, wenn die Linie $P_H$ über der Linie für optimalen Wirkungsgrad liegt.

Obwohl hier $\varphi$-Werte aufgetragen sind, ist die Ordinate in Leistungseinheiten beschriftet. Das ist möglich, weil in dem erfindungsgemäßen Regelsystem eine Regelschaltung zum Konstanthalten der Motorleistung enthalten ist, so daß jedem $\varphi$-Wert in vorgebbarer Weise ein bestimmter Leistungswert zugeordnet ist.

Je ein D-Wert und ein A-Wert gleicher Numerierung ergeben zusammen einen Punkt der Motorleistungskennlinie $P \varphi (n)$, die gespeichert ist.

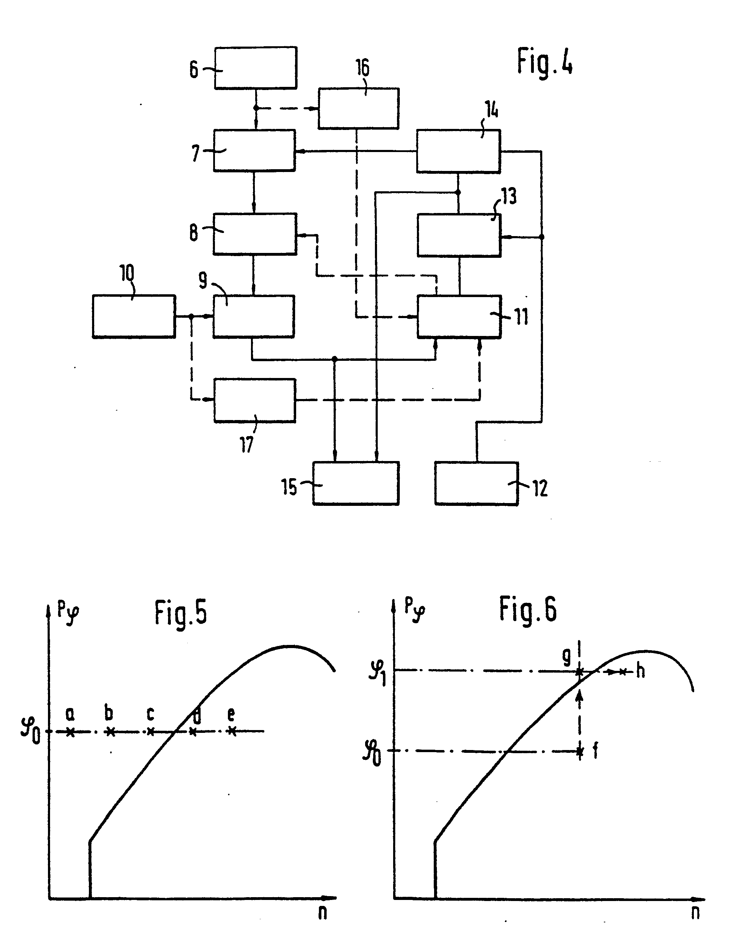

Mit dem in Fig. 4 als Blockschaltbild dargestellten Regelsystem werden die Schaltvorgänge vollautomatisch so bewerkstelligt, daß die Betriebspunkte des Motors bei jeder Leistung und Drehzahl unterhalb der Linie P φ (n) liegen. Das Schaltbild bezieht sich auf ein lastschaltbares Getriebe mit Doppelkupplung, bei dem nur ungeradzahlige Gangstufenänderungen, also von 1 nach 2 ($+1$), von 1 nach 4 ($+3$), von 2 nach 3 ($+1$), von 2 nach 5 ($+3$) und von 2 nach 1 ($-1$) möglich sind. Ein Drehzahlgeber 6 für die momentane Kupplungsausgangsdrehzahl n ist an ein Verknüpfungsglied 7 geschaltet, das die Drehzahl n mit einem Speicherwert $j_{lk}$ für Änderung der Übersetzungsverhältnisse multiplikativ verknüpft und ein entsprechendes Ausgangssignal über einen ersten Speicher 8 der Motorleistungslinie P φ (n) an ein Vergleicherglied 9 liefert, an das auch ein Fahrpedalgeber 10 für die momentane Stellung $\varphi_0$ des Fahrpedals angeschlossen ist. Ist $\varphi_0$ bzw. die ihr gleichbedeutende momentane Motorleistung kleiner oder gleich $P_\varphi$, so wird unmittelbar die optimale Gangstufenänderung zur Stufe I veranlaßt. Ergibt sich im Vergleich, daß diese Bedingung nicht erfüllt ist, so wird das Ausgangssignal des Vergleichers 9 einem Steuerglied 11 zugeführt, in dem die möglichen relativen Gangstufenänderungen ermittelt werden. Aus diesen relativen Gangstufenänderungen und dem im Gangstufengeber 12 erfaßten momentan eingelegten Gang $k_0$ werden in einem Zweiten Speicher 14 bzw. Addierglied 13 die möglichen Gangstufen I gebildet, wobei I z. B. bei einem Fünfganggetriebe nur die Werte 1 bis 5 annehmen kann. Aus dem Speicher 14 werden für die momentane Gangstufe $k_0$ und die möglichen neuen Gangstufen I die Änderungen $j_{lk}$ der Getriebeübersetzungen entnommen. Diese Signale $j_{lk}$ werden an das Verknüpfungsglied 7 gelegt, von dem aus das variierte Signal wieder in den Vergleicher 9 gelangt. Um die Forderung zum Einlegen der höchstmöglichen Gangstufe zu erfüllen, erfolgt in dem Steuerglied 11 die Auswahl der möglichen Gangstufenänderungen in der Reihenfolge: Hochschalten um 3 Gänge ($+3$), Hochschalten um einen Gang ($+1$), eingelegte Gangstufe beibehalten (0), Rückschalten um einen Gang ($-1$) und Rückschalten um drei Gänge ($-3$). Diese Reihenfolge läuft so lange ab, bis nach einem Durchlauf durch die Glieder 13, 14, 7, 8 im Vergleicher 9 die Vergleichsbedingung φ bzw. die ihr entsprechende Leistung kleiner gleich $P_S$ erfüllt ist. Dann wird die zugehörige Gangstufe I mit der Schaltvorrichtung 15 eingelegt und der nachfolgende Ablaufzyklus beginnt wieder mit ($+3$).

Mit der Ansteuerung durch die gestrichelten Verbindungslinien vom Drehzahlgeber 6 über ein Differenzglied 16 zum Steuerglied 11 sowie vom Fahrpedalgeber 10 über ein Differenzglied 17 zum Steuerglied 11 wird bezweckt, die Steuerung erst ab einer vorwählbaren Drehzahldifferenz bzw. erst ab einer bestimmten Änderung der Fahrpedalstellung ansprechen zu lassen. Dadurch wird vermieden, daß bei vibrierenden Schwenkbewegungen des Fahrpedals die durch Fahrzeugerschütterungen bedingt sind, ein Dauerbetrieb des Regelsystems und ein fortlaufendes Schalten von Gängen erfolgt, falls der Motorbetriebpunkt in unmittelbarer Nähe der Motorleistungskennlinie P φ (n) liegt. Es wird also eine Schalthysterese erzeugt, die erst überschritten werden muß, um das Regelsystem in Gang zu setzen.

Eine Schalthysterese kann auch dadurch erreicht werden, daß im Speicher 8 eine zweite Schaltlinie abgespeichert ist, die bei einer Rückschaltung (-1 oder -3) von dem Steuerglied 11 ausgewählt wird; gestrichelte Verbindungslinie von 11 nach 8.

Fig. 5 zeigt die Kennlinie P φ (n) mit den Drehzahlstufen a, b, c, d, e, die fünf Getriebegangstufen entsprechen. Die Kurve P φ (n) ist im unteren Bereich abgeschnitten und fällt mit der Drehzahlachse zusammen.

Es gilt folgende Zuordnung, wobei jeweils $\varphi = \varphi 0$ ist.

$$a\ n_1 \doteq K_0 + 3$$
$$b\ n_1 \doteq K_0 + 1$$
$$c\ n_1 \doteq K_0, 0$$
$$d\ n_1 \doteq k_0 - 1$$
$$e\ n_1 \doteq K_0 - 3$$

Wie zu erkennen ist, liegt $\varphi_0$ für die Stufen a, b, c oberhalb von P φ (n). Das Regelsystem wird diese der Reihe nach abfragen und dann die Stufe d mit $n_1 \doteq K_0 -1$ schalten, da sie die nächste unterhalb von P φ (n) liegende Stufe ist.

In Fig. 6 ist ein Schaltvorgang dargestellt. Hier ist ein Motorbetriebpunkt f momentan eingestellt. Da bei konstanter Drehzahl durch Erhöhung von $\varphi_0$ auf $\varphi_1$ der entsprechende Motorbetriebpunkt g oberhalb von P φ $_{(n)}$ liegen würde, schaltet das Regelsystem auf den unterhalb von P φ $_{(n)}$ liegenden Betriebpunkt h zurück.

**Patentansprüche**

1. Regelsystem für eine Kraftfahrzeug-Antriebseinheit aus Hubkolbenmotor und Getriebe, mit Gebern (6, 12, 10) für die Kupplungsausgangsdrehzahl (n), die am Getriebe eingelegte Gangstufe ($K_0$) und die Stellung ($\varphi_0$) des Fahrpedals zur willkürlichen Einstellung der Motorleistung, die alle an ein Steuergerät geschaltet sind, das eine Stelleinrichtung (15) für die Gangstufen (K) steuert, dadurch gekennzeichnet, daß die Motorleistung auf dem mit dem Fahrpedal eingestellten Wert konstant gehalten wird und daß in einem ersten Speicher (8) des Steuergerätes eine die Motorleistung in Abhängigkeit von der Motordrehzahl beschreibende Kennlinie (P φ(n)), in einem zweiten Speicher (14) die den einzelnen Gangstufen entsprechenden Änderungswerte der

Getriebeübersetzung (Verhältniswerte $j_{lk}$ der Getriebeübersetzung) gespeichert sind, und daß das Steuergerät nach Maßgabe der Geber-Meßwerte (n' $K_0$, $\varphi_0$) und der Werte ($j_{lK}$) im Speicher (14) am Getriebe die höchstmögliche Gangstufe einschaltet, bei der die der Fahrpedalstellung entsprechende Motorleistung die Motorleistungskennlinie (P $\varphi$ (n)) noch nicht überschreitet.

2. Regelsystem nach Anspruch 1, dadurch gekennzeichnet, daß die die Motorleistung beschreibende Kennlinie (P $\varphi$ (n)) gebildet wird aus einer Leistungssollwertkennlinie ($P_S$) in Abhängigkeit von der Fahrpedalstellung und aus einer oberen Leistungslinie ($P_H$) in Abhängigkeit von der Kupplungsausgangsdrehzahl, bei der für gleiche Motorleistung nach einer Getriebeschaltung der gleiche spezifische Kraftstoffverbrauch erreicht wie vor der Schaltung.

3. Regelsystem nach den Ansprüchen 1 und 2, dadurch gekennzeichnet, daß das Steuergerät die höchstmögliche Gangstufe einschaltet, bei der der Wert der Fahrpedalstellung ($\varphi$) den Wert (P $\varphi$ (n)) bei der sich für diese höchstmögliche Gangstufe ergebenden Drehzahl (n) noch nicht überschreitet.

4. Regelsystem nach Anspruch 1, dadurch gekennzeichnet, daß in einem dritten Speicher des Steuergeräts die Leistungssollwertkennlinie ($P_S$) in Abhängigkeit von der Fahrpedalstellung enthalten ist und daß das Steuergerät die höchste Gangstufe einschaltet, bei der die Leistungssollwertkennlinie ($P_S$) die obere Leistungslinie ($P_H$) bei der sich für diese höchstmögliche Gangstufe ergebende Drehzahl (n) noch nicht überschreitet.

5. Regelsystem nach Anspruch 1, dadurch gekennzeichnet, daß der zweite Speicher (14) als eine in sich geschlossene, auswechselbare Baueinheit ausgebildet ist.

6. Regelsystem nach Anspruch 1, dadurch gekennzeichnet, daß die im ersten Speicher (8) abgelegte Motorleistungskennlinie (P $\varphi$ (n)) im unteren Drehzahlbereich mit der Drehzahlachse zusammenfällt.

7. Regelsystem nach Anspruch 1, dadurch gekennzeichnet, daß das Steuergerät eine andere Gangstufe nur dann schaltet, wenn eine vorwählbare Drehzahldifferenz bzw. vorwählbare Änderung der Fahrpedalstellung überschritten wird.

8. Regelsystem nach Anspruch 1, dadurch gekennzeichnet, daß der erste Speicher (8) eine erste Kennlinie für eine Hochschaltung und eine zweite Kennlinie für eine Rückschaltung enthält.

9. Regelsystem nach Anspruch 8, dadurch gekennzeichnet, daß die zweite Kennlinie durch Addition und/oder Subtraktion eines vorgebbaren Wertes aus der ersten gebildet wird.

**Revendications**

1. Système de régulation destiné à l'unité d'entraînement d'un véhicule automobile constituée par un moteur à pistons alternatifs et une boîte de vitesses, comprenant des capteurs (6, 12, 10) de la vitesse de rotation de sortie (n) de l'embrayage, de l'étage de vitesse ($K_0$) appliqué à la boîte de vitesses et de la position ($\varphi_0$) de la pédale du conducteur permettant le réglage intentionnel de la puissance du moteur, qui sont tous raccordés à un dispositif de commande qui commande un dispositif de réglage (15) des étages de vitesse (K), caractérisé en ce que la puissance du moteur est maintenue à la valeur constante déterminée par la pédale du conducteur et en ce qu'une ligne caractéristique (P $\varphi$ (n)) décrivant la puissance du moteur en fonction du nombre de tours du moteur est stockée dans une première mémoire (8) du dispositif de commande, et les valeurs modifiées de la démultiplication de la boîte de vitesses (valeur du rapport $J_{lk}$ de la démultiplication de la boîte de vitesses) correspondant aux étages de vitesse individuels sont stockées dans une seconde mémoire (14), et en ce que le dispositif de commande établit dans la boîte de vitesses l'étage de vitesse le plus élevé possible en fonction des valeurs de mesure des capteurs (n, $K_0$, $\varphi_0$) et des valeurs ($j_{lk}$) contenues dans la mémoire (14), étage de vitesse pour lequel la puissance du moteur qui correspond à la position de la pédale du conducteur ne dépasse pas encore la ligne caractéristique de la puissance du moteur (P$\varphi$ (n)).

2. Système de régulation selon la revendication 1, caractérisé en ce que la ligne caractéristique (P$\varphi$ (n)) qui décrit la puissance du moteur est constituée par une ligne caractéristique de valeur de consigne de puissance ($P_S$) en fonction de la position de la pédale du conducteur et par une ligne caractéristique de puissance supérieure ($P_H$) en fonction de la vitesse de sortie de l'embrayage, la même consommation spécifique de carburant étant atteinte pour la même puissance du moteur après une commutation de la boîte de vitesses qu'avant cette commutation.

3. Système de régulation selon les revendications 1 et 2, caractérisé en ce que le dispositif de commande engage l'étage de vitesse le plus élevé possible pour lequel la valeur représentant la position de la pédale du conducteur ($\varphi$) ne dépasse pas encore la valeur (P$\varphi$ (n)) du nombre de tours (n) qui est liée à cet étage de vitesse le plus élevé possible.

4. Système de régulation selon la revendication 1, caractérisé en ce qu'il est stocké dans une troisième mémoire du dispositif de commande la ligne caractéristique de la valeur de consigne de puissance ($P_S$) en fonction de la position de la pédale du conducteur, et en ce que le dispositif de commande engage l'étage de vitesse le plus élevé pour lequel la ligne caractéristique de la valeur de consigne de puissance ($P_S$) de dépasse pas encore la ligne caractéristique de puissance supérieure (P$_H$) pour le nombre de tours (n) correspondant à cet étage de vitesse le plus élevé possible.

5. Système de régulation selon la revendication 1, caractérisé en ce que la seconde mémoire (14) se présente sous forme d'un composant indépendant et pouvant être remplacé.

6. Système de régulation selon la revendication 1, caractérisé en ce que la ligne caractéristique de puissance du moteur (Pφ (n)) entré dans la première mémoire (8) coïncide dans la plage de vitesse inférieure avec l'axe de la vitesse de rotation.

7. Système de régulation selon la revendication 1, caractérisé en ce que le dispositif de commande n'engage un autre étage de vitesse que lorsqu'une différence de vitesse qui peut être choisie à l'avance, ou une modification de la position de la pédale du conducteur qui peut être choisie à l'avance, est dépassée.

8. Système de régulation selon la revendication 1, caractérisé en ce que la première mémoire (8) contient une première ligne caractéristique correspondant à un passage à une vitesse plus élevée et une seconde ligne caractéristique correspondant à un passage à une vitesse plus lente.

9. Système de régulation selon la revendication 8, caractérisé en ce que la seconde ligne caractéristique est formée à partir de la première par addition et/ou soustraction d'une valeur pouvant être être déterminée à l'avance.


**Claims**

1. A control system for a motor vehicle drive unit consisting of a lifting piston engine and gearbox, having transmitters (6, 12, 10) for the initial clutch speed (n), the gear (K$_0$) engaged in the gearbox and the position (φ$_0$) of the accelerator in relation to the random setting of the engine output, all of the transmitters being connected to a control apparatus controlling an adjustment device (15) for the gears (K), characterised in that the engine output is kept constant at the level set by the accelerator, that a characteristic curve (P φ (n)) describing the engine output as a function of the engine speed is stored in a first memory (8), while the change values of the gearbox ratio (relative values j$_{lk}$ of the gearbox ratio) corresponding to the individual gears are stored in a second memory, and in that, according to the transmitter measured values (n, K$_0$, φ$_0$) and the values (j$_{lk}$) in the memory (14), the control apparatus engages in the gearbox the highest possible gear at which the engine output corresponding to the accelerator position still does not exceed the characteristic curve of engine output (P φ (n)).

2. A control system according to claim 1, characterised in that the characteristic curve describing the engine output (P φ (n)) is formed from a characteristic curve of set output values (P$_S$) as a function of the accelerator position and from an upper output curve (P$_H$) as a function of the initial clutch speed, at which, for the same engine output after a gear change, the same specific fuel consumption attained before the change is attained.

3. A control system according to claims 1 and 2, characterised in that the control apparatus engages the highest possible gear at which the value of the accelerator position (φ) still does not exceed the value (P φ (n)) in the case of the speed (n) produced for this highest possible gear.

4. A control system according to claim 1, characterised in that the characteristic curve of set output values (P$_S$) as a function of the accelerator position is contained in a third memory of the control apparatus, and in that the control apparatus engages the highest gear at which the characteristic curve (P$_S$) of set output values still does not exceed the upper output curve (P$_H$) in the case of the speed (n) produced for this highest possible gear.

5. A control system according to claim 1, characterised in that the second memory (14) is designed as a self-contained, replaceable component part.

6. A control system according to claim 1, characterised in that the characteristic curve (P φ (n)) of engine output in the first memory (8) coincides with the speed axis in the lower speed range.

7. A control system according to claim 1, characterised in that the control apparatus only changes gear when a pre-selectable speed difference or pre-selectable change of the accelerator position is exceeded.

8. A control system according to claim 1, characterised in that the first memory (8) contains a first characteristic curve for an upward gear change and a second characteristic curve for a downward gear change.

9. A control system according to claim 8, characterised in that the second characteristic curve is formed by addition and/or subtraction of a value which can be pre-set from the first curve.

Fig.1

Fig.2

Fig.3

0 097 765

Fig.4

Fig.5

Fig.6